(19) Europäisches Patentamt
European Patent Office
Office européen des brevets

(11) Veröffentlichungsnummer: **0 411 407 B1**

(12) **EUROPÄISCHE PATENTSCHRIFT**

(45) Veröffentlichungstag der Patentschrift: **02.03.94**

(51) Int. Cl.$^5$: **C07F 7/18**, C03C 25/02, C08L 77/00

(21) Anmeldenummer: **90113913.9**

(22) Anmeldetag: **20.07.90**

(54) **Haftvermittler für Glasfaserschlichten.**

(30) Priorität: **02.08.89 DE 3925523**

(43) Veröffentlichungstag der Anmeldung:
**06.02.91 Patentblatt 91/06**

(45) Bekanntmachung des Hinweises auf die Patenterteilung:
**02.03.94 Patentblatt 94/09**

(84) Benannte Vertragsstaaten:
**BE DE FR GB IT NL**

(56) Entgegenhaltungen:
**EP-A- 0 230 891**
**DE-A- 2 934 550**

(73) Patentinhaber: **BAYER AG**

**D-51368 Leverkusen(DE)**

(72) Erfinder: **Jonas, Friedrich, Dr.**
**Krugenofen 15**
**D-5100 Aachen(DE)**
Erfinder: **Marx, Anna, Dr.**
**Willi-Baumeister-Strasse 54**
**D-5090 Leverkusen(DE)**
Erfinder: **Hennen, Alban**
**Karl-Jasper-Strasse 113**
**D-5090 Leverkusen(DE)**

EP 0 411 407 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue Haftvermittler für Glasfaserschlichten, diese Haftvermittler enthaltende Schlichten und damit ausgerüstete Glasfasern sowie die Verwendung der so beschlichteten Glasfasern zur Verstärkung von Kunststoffen.

Es ist bekannt, organische Polymere mit Glasfasern in Form von geschnittenen Strängen, Rovings oder Geweben zu verstärken. Breite Anwendung finden hier Fasern aus E- und A-Glas. Auch Spezialtypen wie C-, D-, R- und S-Gläser werden verwertet. Als Kunststoff-Komponenten von Verbundsystemen eignen sich alle organischen Polymere, aus denen Formkörper hergestellt werden können wie z.B. die bekannten Duromere, Thermoplaste und Elastomere.

Um eine gute Verarbeitbarkeit, Verträglichkeit und Verstärkungswirkung in der Kunststoff-Matrix zu erreichen, werden die Glasfasern beschlichtet, bevorzugt bei ihrer Formgebung während des Faserziehprozesses und zwar mit einer mit dem zu verstärkenden Polymer kompatiblen und die Haftungseigenschaften der Glasfasern verbessernden Schlichte. Dabei werden die Eigenschaften glasfaserverstärkter Kunststoffe wesentlich durch das Leistungsvermögen der Grenzschicht Faser/Kunststoff-Matrix beeinflußt.

Neben der grundsätzlichen Aufgabe der Schlichte, Schaffung eines Verbundes zwischen Faser und Kunststoff-Matrix, hat das Schlichtemittel zum Ziel, die Herstell-und Verarbeitbarkeit der Glasfasern sicherzustellen. Zu erwähnen sind hier die Anforderungen z.B. hinsichtlich Cakeablauf, Aufladung, Schutz gegenüber Reibung und Glasbruch sowie die für die Konfektionierung wichtigen Größen wie Gebundenheit, Härte und Steifigkeit des Faserstranges.

Die Schlichte ist im allgemeinen eine wäßrige Lösung oder Dispersion und besteht in der Regel mengenmäßig überwiegend aus einem oder mehreren Filmbildnern sowie einem oder mehreren Haftvermittlern und gegebenenfalls weiteren Zusätzen wie z.B. Gleitmittel, Netzmittel oder antistatisch wirkenden Substanzen usw. (siehe K. L. Loewenstein: The Manufacturing Technology of Continuous Glass Fibers, Elsevier Scientific Publishing Corp. Amsterdam, London, New York, 1973).

Beispiele für filmbildende Polymere sind Epoxypolymere, Polyesterpolymere, Polyurethane, Acrylpolymere, Vinylpolymere, Mischungen solcher Polymere und Copolymere von entsprechenden Monomeren.

Speziell werden z.B. zur Beschlichtung von Glasfasern, die in Polyamide wie Polyamid 6.6. oder Polyamid 6 eingearbeitet werden sollen, Glasfaserschlichten eingesetzt, die Polyurethandispersionen als Filmbildner und Aminoalkyltrialkoxysilane wie z.B. Aminopropyltriethoxysilan als Haftvermittler enthalten (siehe K. L. Loewenstein 1.c.).

Weitere geeignete Haftvermittler sind in der DE-A-2 934 550 beschrieben; es handell sich hierbei u.a. um Maleimimidopropyl-trialkoxysilane.

Durch die Verwendung der Aminoalkyltrialkoxysilane als Haftvermittler werden eine gute Haftung zwischen Polyamidkunststoffen und der Glasfaser, und damit gute mechanische Eigenschaften der aus diesen glasfaserverstärkten Polyamidkunststoffen hergestellten Kunststoffteilen erreicht. Nachteilig bei der Verwendung dieser Haftvermittler ist die dadurch bedingte Gelbfärbung des Polyamids.

Es bestand daher die Aufgabe, einen Haftvermittler zu entwickeln, der die guten mechanischen Werte, die mit Aminoalkyltrialkoxysilanen erreicht werden, ebenfalls erreicht und gleichzeitig zu einer geringeren Gelbfärbung der glasfaserverstärkten Kunststoffe, z.B. des Polyamids führt.

Überraschenderweise wurde nun gefunden, daß die erfindungsgemäßen Haftvermittler die gestellte Aufgabe erfüllen und die oben genannten Nachteile der herkömmlichen Haftvermittler nicht aufweisen und zu geringer oder gar keiner Gelbfärbung bei gleichzeitig guten mechanischen Eigenschaften führen.

Bei den erfindungsgemäßen Haftvermittlern handelt es sich um Verbindungen folgender Formel I

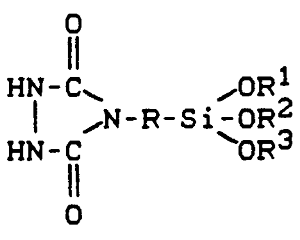

I

in der

R für einen gegebenenfalls verzweigten Alkylenrest mit 1 bis 20 C-Atomen oder einen gegebenenfalls mit Alkyl- oder Halogenresten substituierten Arylenrest mit 6 bis 10 Atomen

und

$R^1$, $R^2$, $R^3$ gleich oder verschieden sind und für einen gegebenenfalls verzweigten Alkylrest mit 1 bis 20 C-Atomen oder einen Arylrest mit 6 bis 10 C-Atomen oder Wasserstoff stehen.

Bevorzugt sind Haftvermittler der Formel I, in denen R für eine der Gruppen $-CH_2-CH_2-$, $-CH_2-CH_2-CH_2-$ oder

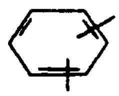

und

$R^1$, $R^2$, $R^3$ gleich oder verschieden sind und für H, $-CH_3$, $-C_2H_5$ oder

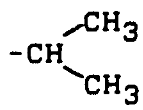 ,

stehen.

Die Herstellung der Haftvermittler der Formel I erfolgt nach an sich bekannten Verfahren, z.B. durch Umsetzung von Hydrazodicarbonamid II mit Aminen der Formel III, in denen R, $R^1$, $R^2$, $R^3$ die oben angegebene Bedeutung haben.

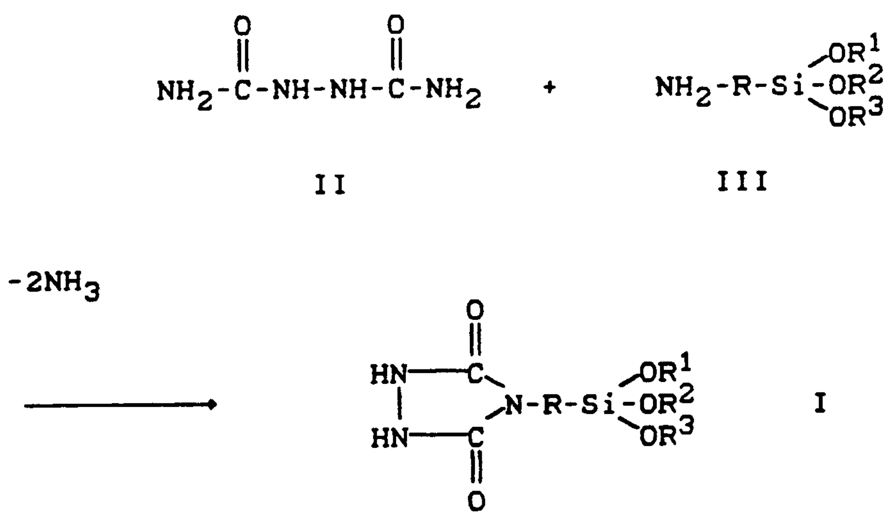


II III I

Diese an sich bekannten Verfahren sind z.B. in der EP 45 371 beschrieben.

Die erfindungsgemäßen Haftvermittler werden in Schlichtemitteln verwendet, mit denen Glasfasern beschlichtet werden.

Neben diesen Haftvermittlern der Formel I enthalten die normalerweise wäßrigen Schlichtemittel einen oder mehrere Filmbildner und gegebenenfalls weitere Zusätze wie Gleitmittel, Netzmittel und/oder Antistatika usw.

Bevorzugt werden als Filmbildner Polyurethandispersionen eingesetzt.

Die Schlichte enthält wie bereits oben erwähnt normalerweise Wasser oder Wasser-Alkoholgemische als Lösungs- oder Dispersionsmittel. Es besteht aber auch die Möglichkeit, die Schlichte aus organischen Lösungsmitteln auf die Glasfaser aufzubringen.

Im allgemeinen enthält die Schlichte, bezogen auf die Gesamtmenge, 1 bis 20 % Filmbildner und Haftvermittler.

Die erfindungsgemäßen Haftvermittler der Formel I werden vorzugsweise in einer Menge von 0,1 % bis 2 % bezogen auf Gesamtmenge der Schlichte eingesetzt.

Das Aufbringen der Schlichte auf die Glasfaser erfolgt auf bekannte Weise, d.h. mit Hilfe geeigneter Vorrichtungen, wie z.B. Sprüh- oder Walzensystemen, auf die mit hoher Geschwindigkeit aus Spinndüsen gezogenen Glasfilamente sofort nach ihrem Erstarren. Die beschlichteten, feuchten Glasfasern werden bei Temperaturen von 90-150 °C getrocknet. Unter Trocknung ist dabei nicht allein die Entfernung von Wasser und anderen flüchtigen Bestandteilen zu verstehen, sondern z.B. auch das Festwerden der Schlichtebestandteile. Erst nach beendeter Trocknung hat sich die Schlichte in die fertige Überzugsmasse verwandelt.

Die so beschlichten Glasfasern werden in Kunststoffen, vorzugsweise Polyamiden verarbeitet.

Die Erfindung soll anhand der nachfolgenden Beispiele näher erläutert werden.

Beispiel 1

Herstellung von 4(3-Triethoxysilyl-prop-1-yl)triazolidin-3,5-dion

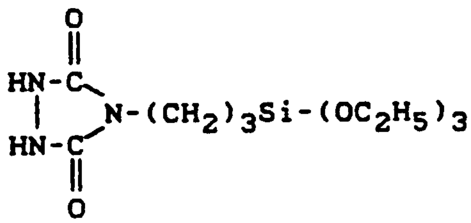

In einem 4 l Dreihalskolben mit Rührer, Rückflußkühler und Innenthermometer werden 354 g Hydrazodicarbonamid, 663 g 3-Triethoxysilylpropylamin und 1700 g N-Methylpyrrolidon vorgelegt. Unter Rühren wird auf 160 °C aufgeheizt bis zur beginnenden Ammoniakentwicklung. Im Verlauf von 2,5 Stunden wird die Temperatur auf 180 °C erhöht und dann 3 Stunden bei 180 °C gerührt bis zur klaren Lösung. Das Ende der Reaktion ist erreicht, wenn die Ammoniakentwicklung beendet ist. Anschließend wird abgekühlt und das N-Methylpyrrolidon im Vakuum bei 0,3 mbar weitestgehend abdestilliert. Der Rückstand wird mit 390 g Methanol versetzt und nach 16 h Stehen bei Raumtemperatur von geringen Mengen eines weißen Niederschlages befreit. Man erhält 1300 g einer ca. 70 %igen methanolischen Lösung von 4-(3-Triethoxysilyl-prop-1-yl)-triazolidin-3,5-dion.

A) Herstellung des Schlichtemittels

In einem Mischbehälter wird der größte Teil des erforderlichen Wassers vorgelegt und unter Rühren der Haftvermittler zugefügt. Unter ständigem Weiterrühren werden nacheinander der Filmbildner und Gleitmittel zugegeben. Der pH-Wert der Schlichte wird nach Zusatz des restlichen Wassers mit Essigsäure auf etwa 5,5 eingestellt.
Mengenangaben siehe Tabelle 1

B) Applikation der Schlichte

Die Schlichte wird bei der Herstellung der Glasfaser wie folgt appliziert:
Nach Austritt aus der Spinndüse (bushing) werden die Filamente durch rasches Abziehen verstreckt und passieren dabei einen Schlichteapplikator in dem sich das wäßrige Bindemittel befindet. Dieser Applikator besteht aus einem Walzensystem, dessen vorderste Walze mit Schlichte beaufschlag ist. Die Filamente werden an dieser Walze vorbeigeführt und nehmen dabei die wäßrige Schlichte auf. Anschließend werden die nassen Cakes im Umluftofen getrocknet.

C) Prüfung der Verstärkungswirkung von beschlichteten Glasfasern

Die derart geschlichteten und für 9 h bei 130 °C getrockneten Glasfasern (E-Glas) werden in Form von auf 6 mm Länge geschnittenen Strängen, die aus je 1000 Einzelfäden mit einem Durchmesser von 10 µ bestehen, in einem Doppelwellenextruder in Polyamid 6 (Durethan B 31F, Bayer AG) eingearbeitet, wobei der Glasgehalt im glasfaserverstärkten Polyamid 30 % beträgt.

Die Prüfung der mechanischen Eigenschaften der glasfaserverstärkten Polyamide ergab die aus Tabelle 2 ersichtlichen Ergebnisse.

**Tabelle 1** Zusammensetzung der Schlichten

| | % Filmbildner (PU-Dispersion [1]) | % Haftvermittler | % Gleitmittel | Wasser |
|---|---|---|---|---|
| Vergleichsversuch 1 | 4,5 | 1 (A[2]) | 0,5 B[4]) und 0,06 C[5]) | ad 100 % |
| Vergleichsversuch 2 | 4,5 | - | " | " |
| Erfindungsgemäßer Versuch | 4,5 | 1 (X[3]) | " | " |

1) PU-Dispersion: Polyesterurethan auf Basis von Hexandiolneopentylglykoladipat und Hexandiisocyanat/Isophorondiisocyanat

2) A: $NH_2-CH_2-CH_2-CH_2-Si(OC_2H_5)_3$

3) X: 4-(3-Triethoxysilyl-prop-1-yl)triazolidin-3,5-dion

4) B: Polyether auf Basis Propylenoxid/Ethylenoxid im Verhältnis 1:1, MG 1800 (Breox 50 A 140, Verkaufsprodukt der Firma BP)

5) C: Polyvinylpyrrolidon (Luviscol K 30, Verkaufsprodukt der Firma BASF)

Tabelle 2

| Eigenschaften der glasfaserverstärkten Polyamide | | | |
|---|---|---|---|
| | Biegefestigkeit $N/mm^2$ | Schlagzähigkeit $KJ/m^2$ | Farbe |
| Vergleichsver. 1 | 274 | 63 | gelb |
| Vergleichsver. 2 | 259 | 59 | hellgelb-farblos |
| Erfindungsgemäßer Versuch | 279 | 69 | hellgelb-farblos |

Wie aus der Tabelle 2 zu ersehen ist, zeigen die Vergleichsversuche, daß ein Haftvermittler unbedingt erforderlich ist und daß der erfindungsgemäße Haftvermittler gleich gute Ergebnisse bezüglich der mechanischen Kenngrößen liefert wie Aminopropyltriethoxysilan (A 1100) als Haftvermittler.

Bezüglich der Färbung der verstärkten Polyamide zeigt sich, daß ein Weglassen des Haftvermittlers A 1100 die Farbe zwar deutlich verbessert, aufgrund des Einbruchs bei den Verstärkungswerten jedoch nicht infrage kommt, während mit der erfindungsgemäßen Verbindung hellere Produkte als mit dem Haftvermittler A 1100 mit gleichzeitig guter Verstärkungswirkung erhalten werden.

## Patentansprüche

**1.** Haftvermittler der allgemeinen Formel I

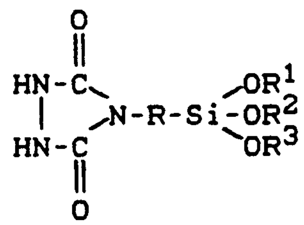

in der
R für einen gegebenenfalls verzweigten Alkylenrest mit 1 bis 20 C-Atomen oder einen gegebenenfalls mit Alkyl-oder Halogenresten substituierten Arylenrest mit 6 bis 10 Atomen steht,
und
$R^1$, $R^2$, $R^3$ gleich oder verschieden sind und für einen gegebenenfalls verzweigten Alkylrest mit 1 bis 20 C-Atomen, einen Arylrest mit 6 bis 10 C-Atomen oder Wasserstoff stehen.

**2.** Haftvermittler gemäß Anspruch 1, in denen
R für $-CH_2-CH_2-$, $-CH_2-CH_2-CH_2-$ oder

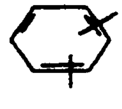

steht
und $R^1$, $R^2$, $R^3$ gleich oder verschieden sind und für
H, $-CH_3$, $-C_2H_5$,

stehen.

3. Verfahren zur Herstellung der Haftvermittler gemäß einem der Ansprüche 1 oder 2 durch Umsetzung von Hydrazodicarbonamid der Formel II mit Aminen der Formel III unter Abspaltung von Ammoniak, wobei R und $R^1$, $R^2$, $R^3$ die im Anspruch 1 bzw. 2 genannte Bedeutung haben

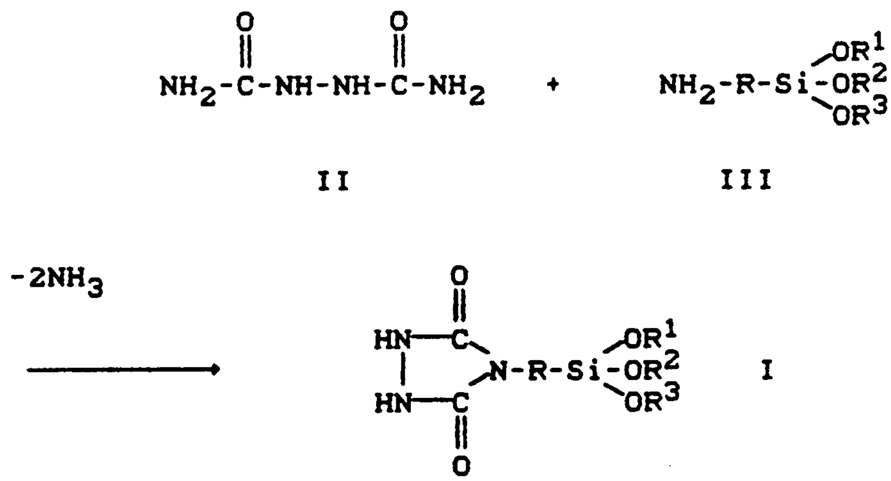


II III I

4. Verwendung der Haftvermittler gemäß einem der Ansprüche 1 oder 2 in Schlichtemitteln.

5. Verwendung der Schlichtemittel gemäß Anspruch 4 zur Beschlichtung von Glasfasern.

6. Verwendung der geschlichteten Glasfasern gemäß Anspruch 5 zur Verstärkung von Kunststoffen, insbesondere Polyamiden.

**Claims**

1. Adhesion promoters corresponding to the general formula I

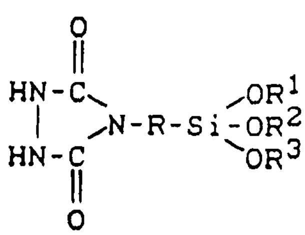

in which
R stands for an optionally branched alkylene radical having 1 to 20 carbon atoms or an arylene radical having 6 to 10 carbon atoms optionally optionally substituted by alkyl or halogen radicals
and $R^1$, $R^2$, $R^3$ are the same or different and denote an optionally branched alkyl radical having 1 to 20 carbon atoms, an aryl radical having 6 to 10 carbon atoms, or hydrogen.

2. Adhesion promoters according to claim 1, in which R represents $-CH_2-CH_2-$, $-CH_2-CH_2-CH_2-$ or

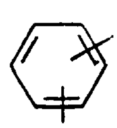

and $R^1$, $R^2$, $R^3$ are the same or different and denote
$H$, $-CH_3$, $C_2H_5$,

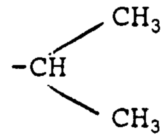
.

3. A process for the preparation of the adhesion promoters according to one of the claims 1 or 2 by the reaction of hydrazodicarbonamide of formula II with amines of formula III with elimination of ammonia, wherein R, $R^1$, $R^2$ and $R^3$ have the meanings indicated in claim 1 or 2.

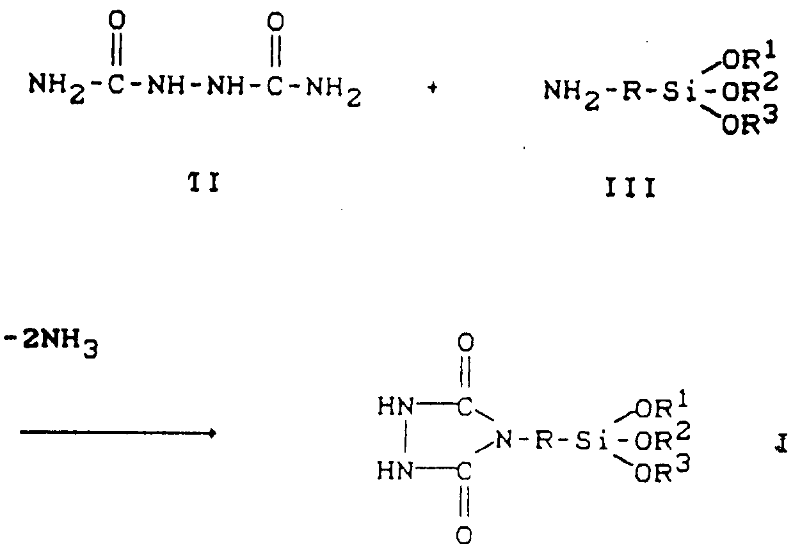

II
III
I

4. Use of the adhesion promoters according to one of the claims 1 or 2 in sizing agents.

5. Use of the sizing agents according to claim 4 for sizing glass fibres.

6. Use of the sized glass fibres according to claim 5 for reinforcing plastics, in particular polyamides.

**Revendications**

1. Agents d'accrochage de formule générale I

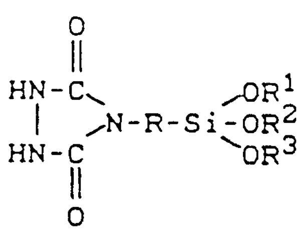

dans laquelle

R représente un reste alkylène éventuellement ramifié ayant 1 à 20 atomes de carbone ou un reste arylène de 6 à 10 atomes de carbone substitués le cas échéant avec des

restes alkyle ou halogéno
et

$R^1$, $R^2$, $R^3$ sont identiques ou différents et représentent un reste alkyle éventuellement ramifié ayant 1 à 20 atomes de carbone, un reste aryle ayant 6 à 10 atomes de carbone ou de l'hydrogène.

**2.** Agents d'accrochage suivant la revendication 1, dans lesquels
R représente un groupe $-CH_2-CH_2-$, $-CH_2-CH_2-CH_2-$ ou

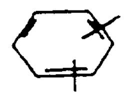

et $R^1$, $R^2$, $R^3$ sont identiques ou différents et représentent
H, $-CH_3$, $-C_2H_5$,

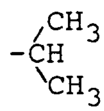

**3.** Procédé de production des agents d'accrochage suivant l'une des revendications 1 et 2 par réaction d'hydrazodicarboxamide de formule II avec des amines de formule III, avec élimination d'ammoniac, R ayant la définition mentionnée dans la revendication 1 ou 2

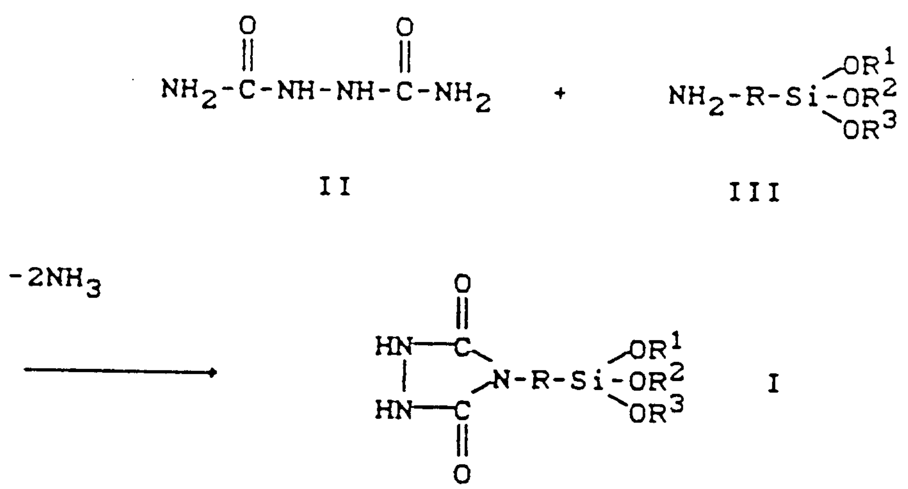


II

III

I

**4.** Utilisation des agents d'accrochage suivant l'une des revendications 1 et 2 dans des compositions d'ensimage.

**5.** Utilisation des compositions d'ensimage suivant la revendication 4 pour l'ensimage de fibres de verre.

**6.** Utilisation des fibres de verre ensimées suivant la revendication 5 pour le renforcement de matières plastiques, notamment de polyamides.